# EUROPÄISCHE PATENTSCHRIFT

(11) **EP 1 926 609 B1**
(45) Veröffentlichungstag und Bekanntmachung des Hinweises auf die Patenterteilung: **09.06.2010**
(21) Anmeldenummer: 06776146.0
(22) Anmeldetag: 07.07.2006
(51) Int. Cl.: B60C 11/12, B60C 19/00, B60C 11/03

(54) **FAHRZEUGLUFTREIFEN MIT MIKROEINSCHNITTEN**
PNEUMATIC VEHICLE TYRE WITH MICRO SIPES
PNEUMATIQUES DE VEHICULE COMPRENANT DES MICRO-ENTAILLES

(30) Priorität: 08.09.2005 DE 102005042569
(43) Veröffentlichungstag der Anmeldung: 04.06.2008
(73) Patentinhaber: Continental Reifen Deutschland GmbH, 30165 Hannover (DE)
(72) Erfinder: MUNDL, Reinhard, A-1130 Wien (AT); DIENSTHUBER, Franz, 30559 Hannover (DE); KAISER, Hinnerk, 30659 Hannover (DE); MÜLLER, Sabine, 30161 Hannover (DE); CELIK, Akif, 30419 Hannover (DE); HEINE, Stefan, 30163 Hannover (DE)
(74) Vertreter: Finger, Karsten
(86) Internationale Anmeldenummer: PCT/EP2006/006649
(87) Internationale Veröffentlichungsnummer: WO 2007/028438

(56) Entgegenhaltungen:
- EP-A- 0 968 850
- EP-A- 1 520 733
- EP-A- 1 580 034
- EP-A- 1 625 950
- EP-A1- 1 829 712
- WO-A-2006/059640
- PATENT ABSTRACTS OF JAPAN Bd. 014, Nr. 473 (M-1035), 16. Oktober 1990 (1990-10-16) -& JP 02 189203 A (BRIDGESTONE CORP), 25. Juli 1990 (1990-07-25)

## Beschreibung

Die Erfindung betrifft einen Fahrzeugluftreifen mit einem Laufstreifen, welcher durch Umfangsnuten, durch Quernuten und gegebenenfalls weitere Rillen in Profilpositive gegliedert ist, welche zumindest zum Teil mit einer Vielzahl von Standardeinschnitten mit einer Breite größer 0,4 mm und bis zu 0,8 mm, welche innerhalb der Profilpositive vorzugsweise parallel zueinander verlaufen, und mit Mikroeinschnitten versehen sind, die eine Breite von 0,1 mm bis 0,4 mm, insbesondere bis zu 0,3 mm, aufweisen.

Ein derartiger Fahrzeugluftreifen ist aus der EP 1 520 733 A1 bekannt. Die Profilpositive des Laufstreifens weisen Standardeinschnitte auf, die im Wesentlichen in Profilquerrichtung orientiert sind. Eine Vielzahl von schmäleren, etwa 0,3 mm breiten und seicht ausgeführten Mikroeinschnitten kreuzt die Standardeinschnitte. Aus der EP 0 968 850 A ist ein Fahrzeugluftreifen bekannt, dessen Profilpositive mit zwei einander kreuzenden Scharen aus schmalen und seichten Einschnitten mit einer Breite und Tiefe im Bereich von 0,3 bis 1,5 mm versehen sind. Die EP 1 829 712 A, welche einen Stand der Technik gemäß Art. 54 (3) EPÜ darstellt, offenbart ebenfalls einen Fahrzeugluftreifen mit Profilpositiven mit einer Vielzahl von seichten und schmalen Mikroeinschnitten in Kombination mit Standardeinschnitten. Die in einer großen Anzahl vorgesehenen Mikroeinschnitte sind in bestimmten Laufstreifenbereichen mit einer größeren Dichte angeordnet als in anderen Laufstreifenbereichen. In sämtlichen Profilpositiven sind die Mikroeinschnitte ferner derart angeordnet, dass sie sich mit den Standardeinschnitten kreuzen.

Es ist vor allem bei PKW-Winterreifen üblich, diese mit Laufstreifen zu versehen, deren Profilpositive - Blöcke und Laufstreifenbänder - jeweils mit einer Vielzahl von zueinander meist parallel verlaufenden geraden, wellenförmigen, zickzackförmigen oder stufenförmigen Einschnitten versehen sind. So ist beispielsweise aus der EP 0 696 216 B1 ein Fahrzeugreifen bekannt, dessen Laufstreifen asymmetrisch gestaltet ist, derart, dass er, auf das Fahrzeug bezogen, einen Laufstreifeninnenabschnitt aufweist, welcher mit treppen- oder sägezahnförmig verlaufenden Einschnitten versehen ist und einen Laufstreifenaußenabschnitt aufweist, in welchem die Einschnitte wellenförmig- oder zickzackförmig ausgeführt sind. Diese Maßnahmen sollen im Außenschulterbereich des Reifens die Profilsteifigkeit unter Querkraftbeanspruchung erhöhen, im Laufstreifeninnenabschnitt eine gute Übertragung von Traktionskräften sicherstellen, um möglichst viele Griffkanten zur Verfügung zu stellen. Um die Biegesteifigkeit von Profilpositiven gezielt zu beeinflussen und insbesondere die Traktions- und Bremseigenschaften zu optimieren, wird in der EP 0 691 222 B1 vorgeschlagen, die Einschnitte in den Profilpositiven des Laufstreifenprofils derart anzuordnen, dass sie ein Netz aus regelmäßigen bzw. im Wesentlichen regelmäßigen Sechsecken bilden. Die in Laufstreifen von Winterreifen üblicherweise vorgesehenen Einschnitte werden in der Vulkanisationsform mittels in dieser eingesetzter Lamellenbleche eingeprägt, welche üblicherweise eine Breite zwischen 0,5 und 0,8 mm aufweisen und Einschnitte gleicher Breite erzeugen. Für eine weitere Verbesserung der Griffeigenschaften und des Traktions- und Bremsvermögen eines Winterreifens unter winterlichen Fahrbedingungen wäre es von Vorteil, zumindest in gewissen Laufstreifenbereichen eine höhere Einschnittdichte vorsehen zu können. Der Erhöhung der Einschnittdichte sind insbesondere dadurch Grenzen gesetzt, dass die Steifigkeit der Profilpositive bei zu hoher Einschnittdichte zu stark abnehmen würde.

Der Erfindung liegt somit die Aufgabe zugrunde, einen Laufstreifen für einen Fahrzeugluftreifen, insbesondere einen Winterreifen oder Ganzjahresreifen, derart mit Einschnitten zu versehen, dass die Griffeigenschaften auf winterlicher Fahrbahn, insbesondere auf Schnee und auf Eis verbessert werden können ohne andere Eigenschaften, wie beispielsweise das Brems- und Traktionsverhalten des Reifens auf trockenen und nassen Fahrbahnen, zu beeinträchtigen.

Gelöst wird die gestellte Aufgabe erfindungsgemäß dadurch, dass in zumindest einem Umfangsbereich des Laufstreifens die in den Profilpositiven vorgesehenen Standardeinschnitte zu den in diesen Profilpositiven vorgesehenen Mikroeinschnitten unter gegenseitigen Abständen parallel verlaufen und in zumindest einem anderen Umfangsbereich des Laufstreifens die in den Profilpositiven vorgesehenen Standardeinschnitte zu den in diesen Profilpositiven vorgesehenen Mikroeinschnitten gekreuzt verlaufen.

Die Mikroeinschnitte bewirken eine deutliche Verbesserung des Griffes auf Schnee und Eis und damit auch des Traktions- und Bremsverhaltens auf schneeigen oder eisigen Fahrbahnen ohne die Profilsteifigkeit merklich zu verringern. Dabei bleiben die Eigenschaften des Reifens auf nassem Untergrund, wie Nassbremsen und Traktion auf Nässe, auf hohem Niveau erhalten.

Ein erfindungsgemäß ausgeführter Fahrzeugluftreifen kann einen Laufstreifen aufweisen, welcher Profilpositive aufweist, die als Einschnitte ausschließlich Mikroeinschnitte enthalten. Derart ausgeführte Reifen sind für den Einsatz unter winterlichen Fahrbedingungen, auf schneeigem oder eisigem Untergrund, besonders gut geeignet.

Die Erfindung eröffnet eine Vielzahl von Möglichkeiten, in einem Laufstreifen Mikroeinschnitte mit Standardeinschnitten, deren Breite 0,4 mm übersteigt, zu kombinieren. Diese Standardeinschnitte weichen die Profilpositive mehr auf als die Mikroeinschnitte und haben auch ein größeres Öffnungsvermögen, was eine Anzahl von Vorteilen, insbesondere in Kombination mit Mikroeinschnitten, mit sich bringt. Gerade eine Kombination von Mikroeinschnitten mit Standardeinschnitten erlaubt es, die Reifeneigenschaften optimal an die jeweiligen Anforderungen anzupassen.

So kann es beispielsweise von Vorteil sein, im Laufstreifen Profilpositive vorzusehen, in welchen als Einschnitte ausschließlich Mikroeinschnitte vorgesehen sind, und andere Profilpositive vorzusehen, in welchen als Einschnitte ausschließlich Standardeinschnitte verlaufen. Damit lässt sich insbesondere gezielt das Traktions- und Bremsverhalten eines Reifens beeinflussen.

Weitere Kombinationsmöglichkeiten ergeben sich bei bestimmten Profilausführungen. So gibt es Laufstreifen, die zumindest im Wesentlichen übereinstimmende Profilstrukturen in den Laufstreifenhälften aufweisen, die üblicherweise als symmetrische Laufstreifen bezeichnet sind, auch wenn die Laufstreifenhälften gegenüber dem Reifenäquator in Umfangsrichtung versetzt angeordnet sind. Hier kann nun die Ausführung derart getroffen werden, dass die Profilpositive im zentralen Bereich Mikroeinschnitte aufweisen, die in Querrichtung oder in Umfangsrichtung verlaufen und die Profilpositive in den seitlichen Bereichen Mikroeinschnitte aufweisen, die in Umfangsrichtung oder in Querrichtung verlaufen.

Auch bei Reifen mit sogenannten asymmetrischen Laufstreifen, welche unterschiedliche Profilstrukturen im Laufstreifeninnen- und im Laufstreifenaußenabschnitt aufweisen und welche derart zu montieren sind, dass ein bestimmter Laufstreifenbereich der Fahrzeuglängsachse zugewandt ist, sind erfindungsgemäß ausgeführte Einschnittkonzepte besonders vorteilhaft einsetzbar. Je nach Anforderung und Einsatzgebiet der Reifen kann es nun von Vorteil sein, in der der Fahrzeuglängsachse zugewandten Laufstreifenhälfte, insbesondere schulterseitig, Profilpositive mit Mikroeinschnitten anzuordnen, die in Umfangsrichtung verlaufen, und in der zweiten Laufstreifenhälfte, ebenfalls insbesondere schulterseitig, Profilpositive mit Mikroeinschnitten anzuordnen, die in Querrichtung verlaufen. Dabei kann auch die umgekehrte Ausführung, bei der in der der Fahrzeuglängsachse zugewandte Laufstreifenhälfte Profilpositive mit Mikroeinschnitten vorgesehen sind, die in Querrichtung verlaufen, und in der zweiten Laufstreifenhälfte Profilpositive mit Mikroeinschnitten angeordnet sind, die in Umfangsrichtung verlaufen, sehr vorteilhaft sein.

Auch die gegenseitige Anordnung von Mikroeinschnitten und Standardeinschnitten innerhalb der einzelnen Profilpositive ist von Bedeutung bzw. nimmt Einfluss auf eine Reihe von Reifeneigenschaften, da diese Anordnungen die Profilsteifigkeit bzw. die Beweglichkeit des Profils in diesen Bereichen beeinflussen und bei bestimmten Anordnungen bestimmte Reifeneigenschaften bevorzugt werden. Bei Reifen für den Einsatz unter winterlichen Fahrbedingungen, beispielsweise auf Schnee oder Eis, ist es von Vorteil, wenn in Profilpositiven Mikroeinschnitte und Standardeinschnitte in im Wesentlichen paralleler Anordnung zueinander und abwechselnd aufeinander folgend angeordnet sind. Auch eine kreuzende Anordnung von Mikroeinschnitten mit Standardeinschnitten, wobei der Kreuzungswinkel zwischen 5 und 175° betragen kann, ist möglich.

Soll die Profil- bzw. Profilpositivsteifigkeit möglichst wenig beeinflusst werden können die Mikroeinschnitte auch in Reihen von kurzen Einschnitten angeordnet werden.

In Profilpositiven, in welchen ausschließlich Mikroeinschnitte vorgesehen sind, kann ihre Dichte vergleichsweise hoch gewählt werden, insbesondere zwischen 25 und 40 Einschnitte pro 10 cm Profilpositiv, im rechten Winkel zur Erstreckung der Mikroeinschnitte gemessen. Eine Anordnung der Mikroeinschnitte innerhalb dieses Dichtebereiches beeinflusst die Steifigkeit der Profilpositive weniger als eine Anordnung von Standardeinschnitten in üblicher, wesentlich geringerer Dichte.

Weitere Merkmale, Vorteile und Einzelheiten der Erfindung werden nun anhand der Zeichnung, die Ausführungsbeispiele darstellt, näher beschrieben. Dabei zeigen
Fig. 1 bis Fig. 3 Teilabwicklungen von Laufstreifenprofilen mit unterschiedlichen Ausführungsvarianten der Erfindung.
Fig. 4 bis Fig. 7 Draufsichten auf Profilblöcke mit weiteren Ausführungsvarianten der Erfindung.

Die in den Zeichnungsfiguren beispielhaft dargestellten Laufstreifenprofile sind für Laufstreifen von PKW-Winterreifen oder PKW-Ganzjahresreifen vorgesehen. Sämtliche der dargestellten Profile sind laufrichtungsgebunden ausgeführt. Mit B ist jene Breite des Laufstreifens bezeichnet, über welcher der Reifen beim Abrollen mit dem Untergrund in Kontakt tritt. B entspricht daher der Breite des Reifens in der Bodenaufstandsfläche (unter den in der E.T.R.T.O. genannten Bedingungen).

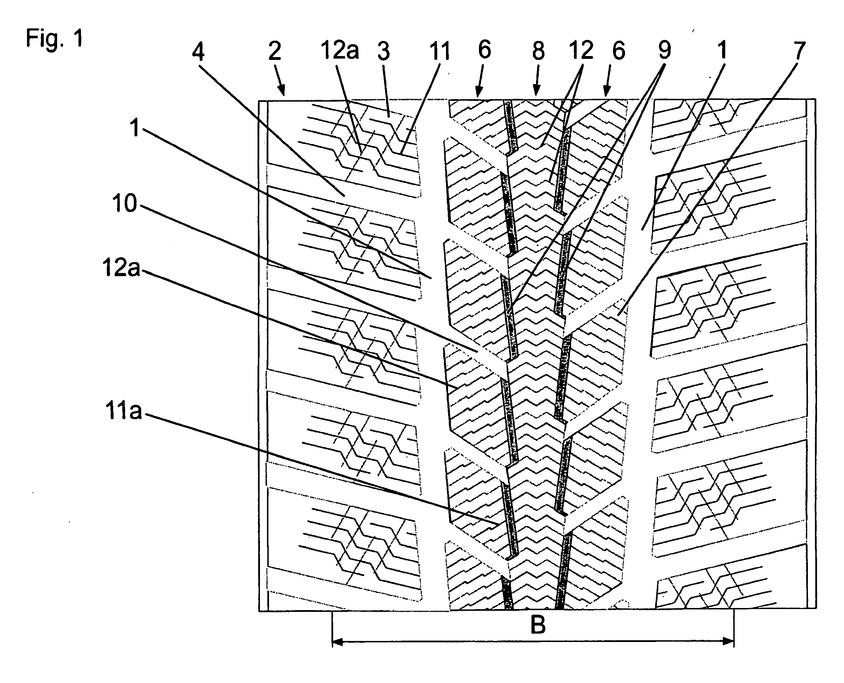

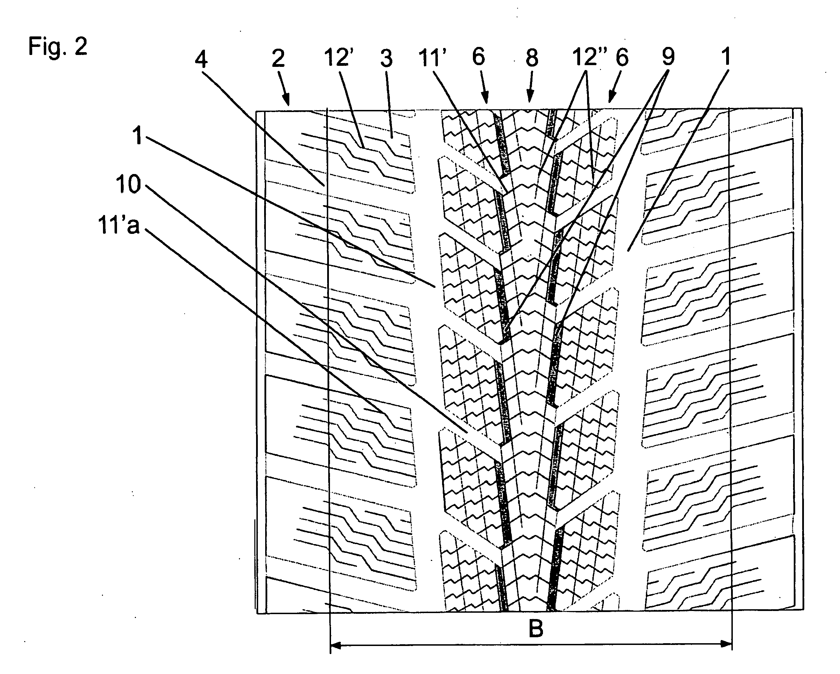

Die in Fig. 1 und Fig. 2 gezeigten Laufstreifenprofile weisen übereinstimmende Grundstrukturen auf, diese sind in jeder Laufstreifenhälfte zumindest im Wesentlichen gleich. In jeder Laufstreifenhälfte ist eine in Umfangsrichtung umlaufende breite Umfangsnut 1 vorgesehen, an welche außen jeweils eine Schulterblockreihe 2 mit Schulterblöcken 3 anschließt. Die Gliederung in Schulterblöcke 3 erfolgt durch breite, gerade verlaufende und unter einem Winkel von etwa 10° zur Querrichtung geneigte Quernuten 4. Die zwischen den in Umfangsrichtung benachbarten Quernuten 4 verlaufenden Abschnitte der Umfangsnut 1 sind jeweils unter einem für sämtliche Abschnitte übereinstimmenden Winkel in der Größenordnung von 2° bis 5° zur Umfangsrichtung geneigt. Der den Reifenäquator einschließende zentrale Bereich des Laufstreifens ist ein lediglich durch Einschnitte 12 gegliedertes Umfangsband 8, an welches jeweils eine mittlere Blockreihe 6 anschließt. Die Blockreihen 6 sind an das mittlere Umfangsband 8 angebunden, da sie vom mittleren Umfangsband 8 nur durch seichte, etwa 2 bis 3 mm tiefe und etwa 2 bis 3 mm breite Umfangsrillen 9 getrennt sind. Die Umfangsrillen 9 sind analog zu den Abschnitten der Umfangsnut 1 geneigt, In Umfangsrichtung sind die einzelnen Blöcke 7 der mittleren Blockreihen 6 durch Sacknuten 10 voneinander getrennt, welche jeweils eine Neigung relativ zur Reifenquerrichtung aufweisen, die jener der Quernuten 4 entspricht, der Winkel, welchen sie mit der Querrichtung einschließen ist jedoch größer, insbesondere um 5° bis 10°, als der Winkel, den die Quernuten 4 mit der Querrichtung einschließen. Die Sacknuten 10 sind ferner schmäler ausgeführt als die Quernuten 4, ihre Breite beträgt etwa die Hälfte der Breite der Quernuten 4.

Die Quernuten 4, die Umfangsnuten 1 und die Sacknuten 10 reichen bis auf die vorgesehene maximale Profiltiefe des Reifens, die bei einem PKW-Reifen üblicherweise 7 bis 8 mm beträgt.

Sämtliche Profilpositive sind jeweils mit einer Anzahl von Einschnitten 11, 11a, 12, 12a versehen. Die Einschnitte 11, 11a weisen eine konstante Breite auf, die größer als 0,4 mm ist und bis zu 0,8 mm beträgt, und sind nachfolgend als Standardeinschnitte bezeichnet, die Einschnitte 12, 12a weisen eine konstante Breite von 0,1 mm bis 0,4 mm, insbesondere bis zu 0,3 mm, auf und sind nachfolgend als Mikroeinschnitte bezeichnet. Sämtliche Einschnitte 11, 11a, 12, 12a werden bei der Herstellung des Reifens in an sich bekannter Weise mittels Lamellenblechen in den betreffenden Segmenten der Vulkanisationsform in den Laufstreifen eingeprägt. Die Tiefe der Standardeinschnitte 11, 11a kann bis zur maximalen Profiltiefe reichen, wobei ein und derselbe Standardeinschnitt 11, 11a abschnittsweise seichter und tiefer ausgeführt sein kann. Die Mikroeinschnitte 12, 12a weisen eine Tiefe zwischen dem 0,1- und 0,9-fachen der maximalen Profiltiefe auf und können über ihren Verlauf ebenfalls eine konstante oder eine variierende Tiefe aufweisen.

In den Blöcken 7 der mittleren Blockreihen 6 sowie dem zentralen Umfangsband 8 sind bei der in Fig. 1 gezeigten Ausführungsvariante abwechselnd Mikroeinschnitte 12 und Standardeinschnitte 11a angeordnet, die bei der dargestellten Ausführung die Blöcke 7 komplett durchqueren, parallel zueinander und zickzack- bzw. treppenförmig verlaufen. Die Einschnitte 11a, 12 in den Blöcken 7 sind gegenüber der Reifenquerrichtung entgegengesetzt zu den Sacknuten 10 geneigt. In den Schulterblöcken 3 sind Standardeinschnitte 11 mit Mikroeinschnitten 12a kombiniert. Die Standardeinschnitte 11 verlaufen in Zickzackform in Richtung der Gluererstreckung der Schulterblöcke 3. Die Mikroeinschnitte 12a sind im Wesentlichen in Reifenumfangsrichtung orientierte, gerade ausgeführte und ein oder mehrere der Standardeinschnitte 11 schneidende Einschnitte, die nur mit ihrem einen Ende in eine Quernut 4 münden. Die Mikroeinschnitte 12a in den Schulterblöcken 3 verlaufen zueinander parallel und weisen zumindest im Wesentlichen übereinstimmende Abstände auf. Der Winkel, den sie mit der Reifenumfangsrichtung einschließen, beträgt mindestens 5°, ihre Orientierung ist entgegengesetzt zur Orientierung der Abschnitte der Umfangsnuten 1. Die Einschnittsdichte der Einschnitte 11 a, 12 im mittleren Bereich des Laufstreifens ist jedenfalls höher als die Dichte der Einschnitte 11 in den Schulterblöcken 3.

Bei der in Fig. 2 gezeigten Ausführungsvariante sind die in den Schulterblöcken 3 stufen- bzw. zickzackförmig verlaufenden Einschnitte Mikroeinschnitte 12' abwechselnd mit Standardeinschnitten 11'a vorgesehen. In den beiden mittleren Blockreihen 6 und im mittleren Umfangsband 8 sind in Reifenquerrichtung orientierte, zickzackförmig ausgeführte Standardeinschnitte 11' angeordnet. Ihr gegenseitiger Abstand in Reifenumfangsrichtung ist größer als der gegenseitige Abstand der entsprechenden Mikroeinschnitte 12 der in Fig. 1 gezeigten Ausführungsform. Die Standardeinschnitte 11' in den mittleren Blockreihen 6 werden von jeweils zwei parallel zueinander und etwa parallel zu den Abschnitten der Umfangsnut 1 verlaufenden Mikroeinschnitten 12" geschnitten, welche die Blöcke 7 durchqueren. Auch das mittlere Umfangsband 8 ist mit in Umfangsrichtung verlaufenden Mirkoeinschnitten 12" versehen, welche etwa parallel zu den Mikroeinschnitten 12" in den Blöcken 7 in Verlängerung der Umfangsrillen 9 verlaufen und innerhalb des Bandes 8 enden.

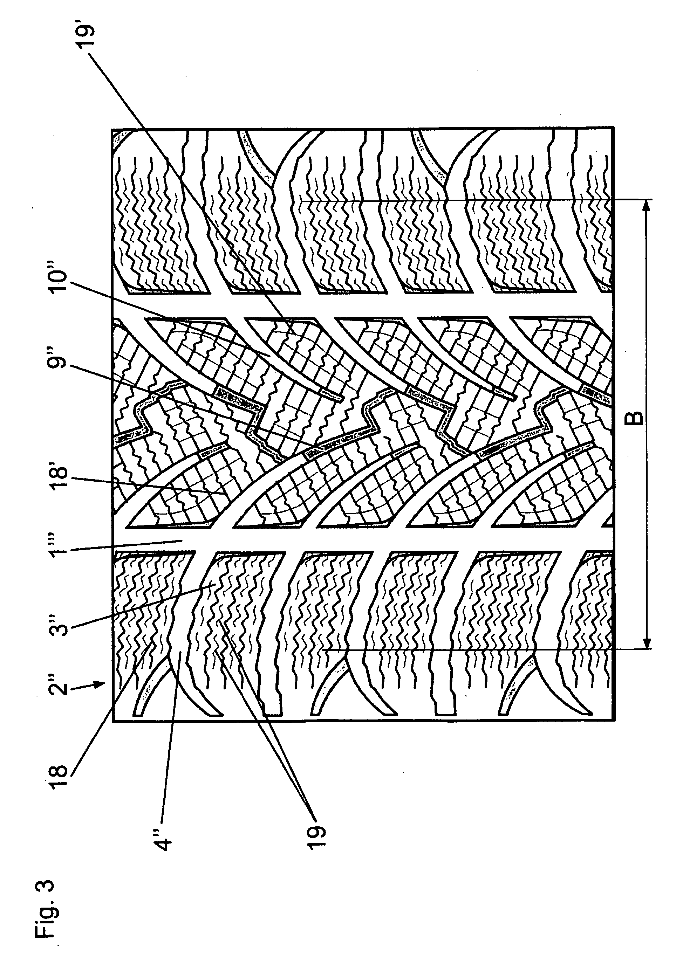

Fig. 3 zeigt eine weitere Ausführungsform eines laufrichtungsgebunden ausgeführten Laufstreifens, welcher in jeder Laufstreifenhälfte eine breite Umfangsnut 1"' aufweist. Quernuten 4" bewirken ein Gliederung in je eine Schulterblockreihe 2" mit Schulterblöcken 3". In Verlängerung der Quernuten 4" verlaufen in den zentralen Bereich des Laufstreifens Sacknuten 10", die gemeinsam mit den Quernuten 4" dem Laufstreifen eine insgesamt gepfeilte Struktur verleihen. Weitere, mit Knicken versehene Verbindungsrillen 9" sind in Verlängerung jeder zweiten Sacknut 10" vorgesehen und reichen bis zu einer Sacknut 10" aus der anderen Laufstreifenhälfte.

In den Schulterblöcken 3" sind parallel zueinander und zu den Quernuten 4" verlaufend, Standardeinschnitte 18 in Zickzackform vorgesehen. Zwischen diesen und zwischen den Standardeinschnitten 18 und der jeweils benachbarten Quernut 4" sind Mikroeinschnitte 19 vorgesehen, die hier keine durchgehenden Einschnitte sondern zickzackförmige aneinander gereihte und voneinander beabstandete Einzeleinschnitte sind. Die Profilpositive zwischen den beiden breiten Umfangsnuten 1"'sind ebenfalls durch Standardeinschnitte 18' gegliedert, welche jeweils parallel zueinander abschnittsweise in Wellen- oder Zickzackform und abschnittsweise parallel verlaufen. In den Profilpositiven, die an die Umfangsnuten 1"' angrenzen, sind die Einschnitte 18' gegensinnig zu den Sacknuten 10" geneigt. Bei dieser Ausführungsvariante sind die Standardeinschnitte 18' zumindest zum Teil von Mikroeinschnitten 19' gekreuzt, welche paarweise zwischen den in Umfangsrichtung benachbarten Sacknuten 10" in übereinstimmender Orientierung zu diesen verlaufen.

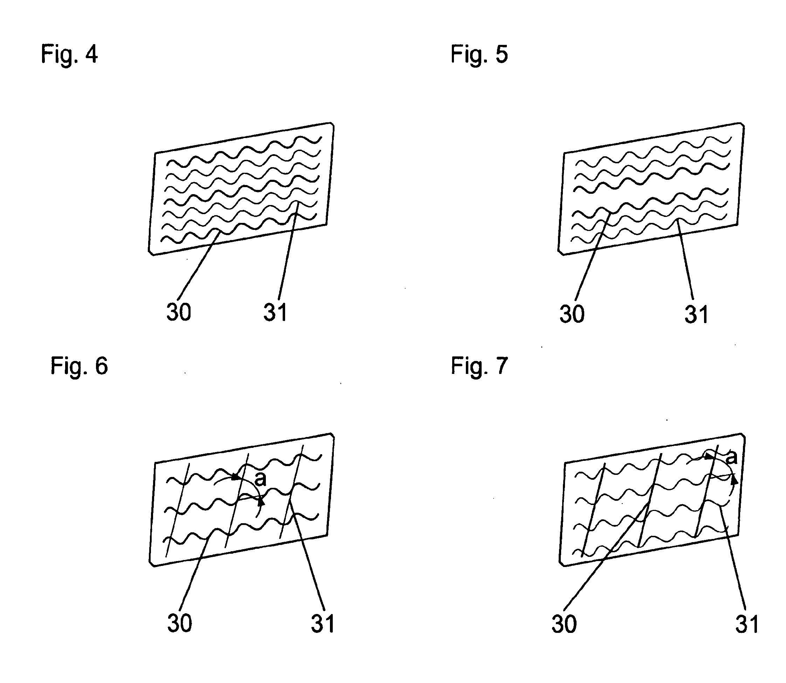

Die in den Fig. 4 bis Fig. 7 dargestellten Profilblöcke zeigen weitere grundsätzliche Varianten der Anordnung von Standardeinschnitten und Mikroeinschnitten. Diese Profilblöcke können beispielsweise Schulterblöcke sein, analoge Einschnittanordnungen können jedoch auch in Laufstreifenbändern, beispielsweise solchen, die im mittleren Bereich eines Laufstreifenprofils verlaufen, vorgesehen werden.

Fig. 4 zeigt eine Ausführungsvariante der gegenseitigen Anordnung von Standardeinschnitten 30 und Mikroeinschnitten 31 in paralleler Anordnung und Wellenform, wobei zwischen den Standardeinschnitten 30 jeweils ein Paar von Mikroeinschnitten 31 verläuft. Bei der in Fig. 5 gezeigten Variante sind ebenfalls parallel zueinander verlaufende Standardeinschnitte 30 und Mikroeinschnitte 31 vorgesehen, wobei im mittleren Bereich des Profilblockes zwei Standardeinschnitte 30 parallel zueinander verlaufen, zu beiden Seiten dieser Einschnitte 30 ist jeweils ein Paar von Mikroeinschnitten 31 vorgesehen. Anordnungen von Standardeinschnitten und Mikroeinschnitten wie sie in Fig. 4 und Fig. 5 gezeigt sind können auch in Umfangsrichtung bzw. im Wesentlichen in Umfangsrichtung verlaufen. Bei weiteren, nicht dargestellten Varianten können mehr als zwei benachbarte Mikroeinschnitte mit zwei oder mehreren Standardeinschnitten abwechseln.

Fig. 6 zeigt eine Ausführungsform, bei der parallel zueinander verlaufende wellenförmige Standardeinschnitte 30 von einer Schar aus drei parallel verlaufenden Mikroeinschnitten 31, welche unter einem Winkel α, der zwischen 5° und 175° betragen kann, gekreuzt werden. Eine umgekehrte Anordnung zeigt Fig. 7, hier verlaufen die Mikroeinschnitte 31 etwa in Reifenquerrichtung und die Standardeinschnitte 30 sind diejenigen, die diese unter einen Winkel von α von 5° bis 175° kreuzen. Es gibt eine Vielzahl weiterer Variationsmöglichkeiten, die hier nicht dargestellt sind, beispielweise ist eine nicht parallele Anordnung der Einschnitte oder eine gruppenförmige Anordnung von Standardeinschnitten und Mikroeinschnitten möglich, wobei beispielsweise in einem Block zwei bis drei solcher Gruppen angeordnet sind.

Die Erfindung ist auf die dargestellten Ausführungsvarianten von Profilen nicht eingeschränkt, Mikroeinschnitte können in jeder Art von Laufstreifen und bei jeder Art von Reifen, auch PKW-Sommerreifen, LKW-Reifen oder Zweiradreifen, vorgesehen werden. Bei sogenannten asymmetrischen Laufstreifenprofilen, dies sind Profile, welche einen im montierten Zustand der Fahrzeuglängsachse zugewandten Laufstreifenabschnitt und einen von dieser abgewandten Laufstreifenabschnitt aufweisen, wobei diese Laufstreifenabschnitte unterschiedlich strukturiert sind, können in einem der Laufstreifenabschnitte Mikroeinschnitte überwiegen, die zumindest im Wesentlichen in Umfangsrichtung orientiert sind. Im anderen Laufstreifenabschnitt können Mikroeinschnitte, die in Laufstreifenrichtung orientiert sind, überwiegen. Die jeweilige Anordnung richtet sich nach den gestellten Anforderungen.

## Patentansprüche

1. Fahrzeugluftreifen mit einem Laufstreifen, welcher durch Umfangsnuten (1, 1"'), durch Quernuten (4, 4") und gegebenenfalls weitere Rillen (10, 10") in Profilpositive (3, 3", 6, 7, 8) gegliedert ist, welche zumindest zum Teil mit einer Vielzahl von Standardeinschnitten (11, 11a, 11', 11'a, 18, 18', 30) mit einer Breite größer 0,4 mm und bis zu 0,8 mm, welche innerhalb der Profilpositive (3, 3", 6, 7, 8) vorzugsweise parallel zueinander verlaufen, und mit Mikroeinschnitten (12, 12a, 12', 12", 19, 19', 31) versehen sind, die eine Breite von 0,1 mm bis 0,4 mm, insbesondere bis zu 0,3 mm, aufweisen,
**dadurch gekennzeichnet,**
**dass** in zumindest einem Umfangsbereich des Laufstreifens die in den Profilpositiven (3, 3", 6, 7, 8) vorgesehenen Standardeinschnitte (11a, 11'a, 18) zu den in diesen Profilpositiven (3, 3", 6, 7, 8) vorgesehenen Mikroeinschnitten (12, 12', 19) unter gegenseitigen Abständen parallel verlaufen und in zumindest einem anderen Umfangsbereich des Laufstreifens die in den Profilpositiven (3, 6, 8) vorgesehenen Standardeinschnitte (11, 11', 18') zu den in diesen Profilpositiven (3, 6, 8) vorgesehenen Mikroeinschnitten (12a, 12", 19') gekreuzt verlaufen.

2. Fahrzeugluftreifen nach Anspruch 1, **dadurch gekennzeichnet, dass** der Laufstreifen Profilpositive aufweist, in welchen als Einschnitte ausschließlich Mikroeinschnitte, und andere Profilpositive aufweist, in welchen als Einschnitte ausschließlich Standardeinschnitte verlaufen.

3. Fahrzeugluftreifen nach Anspruch 1 oder 2 mit einem Laufstreifen mit übereinstimmenden Profilstrukturen in den Laufstreifenhälften, **dadurch gekennzeichnet, dass** die Profilpositive (6, 8) im zentralen Bereich Mikroeinschnitte (12", 19') aufweisen, die in Umfangrichtung verlaufen, und die Profilpositive (3, 3") in den seitlichen Bereichen Mikroeinschnitte (12', 19) aufweisen, die in Querrichtung verlaufen.

4. Fahrzeugluftreifen nach Anspruch 1 oder 2 mit einem Laufstreifen mit übereinstimmenden Profilstrukturen in den Laufstreifenhälften, **dadurch gekennzeichnet, dass** die Profilpositive (6, 7, 8) im zentralen Bereich Mikroeinschnitte (12) aufweisen, die in Querrichtung verlaufen, und die Profilpositive (3) in den seitlichen Bereichen Mikroeinschnitte (12a) aufweisen, die in Umfangsrichtung verlaufen.

5. Fahrzeugluftreifen nach Anspruch 1 oder 2 mit einem Laufstreifen mit unterschiedlichen Profilstrukturen in den beiden Laufstreifenhälften, welcher Reifen derart zu montieren ist, dass eine bestimmte Laufstreifenhälfte der Fahrzeuglängsachse zugewandt ist, **dadurch gekennzeichnet, dass** in der der Fahrzeuglängsachse zugewandten Laufstreifenhälfte, insbesondere schulterseitig, Profilpositive mit Mikroeinschnitten angeordnet sind, die in Umfangsrichtung verlaufen, und in der zweiten Laufstreifenhälfte, insbesondere schulterseitig, Profilpositive mit Mikroeinschnitten angeordnet sind, die in Querrichtung verlaufen.

6. Fahrzeugluftreifen nach Anspruch 1 oder 2 mit einem Laufstreifen mit unterschiedlichen Profilstrukturen in den beiden Laufstreifenhälften, welcher Reifen derart zu montieren ist, dass eine bestimmte Laufstreifenhälfte der Fahrzeuglängsachse zugewandt ist, **dadurch gekennzeichnet, dass** in der der Fahrzeuglängsachse zugewandten Laufstreifenhälfte, insbesondere schulterseitig, Profilpositive mit Mikroeinschnitten angeordnet sind, die in Querrichtung verlaufen, und in der zweiten Laufstreifenhälfte, insbesondere schulterseitig, Profilpositive Mikroeinschnitten angeordnet sind, die in Umfangsrichtung verlaufen.

7. Fahrzeugluftreifen nach Anspruch 1, **dadurch gekennzeichnet, dass** die die Standardeinschnitte Kreuzenden Mikroeinschnitte (31) mit den Standardeinschnitten (30) einen Winkel (α) von 5° bis 175° einschließen.

8. Fahrzeugluftreifen nach einem der Ansprüche 1 bis 7, **dadurch gekennzeichnet, dass** die Mikroeinschnitte (19) in Reihen von kurzen Mikroeinschnitten angeordnet sind.

9. Fahrzeugluftreifen nach einem der Ansprüche 1 bis 8, **dadurch gekennzeichnet, dass** innerhalb eines Profilpositivs (3, 6, 8) die parallel verlaufenden Standardeinschnitte (11a, 11'a, 15) und Mikroeinschnitte (12, 12', 19) abwechselnd angeordnet sind.

10. Fahrzeugluftreifen nach einem der Ansprüche 1 bis 9, **dadurch gekennzeichnet, dass** in Profilpositiven, in welchen ausschließlich Mikroeinschnitte vorgesehen sind, deren Dichte zwischen 25 und 40 Einschnitte pro 10 cm Profilpositiv, im rechten Winkel zur Erstreckung der Mikroeinschnitte gemessen, beträgt.

## Claims

1. Pneumatic vehicle tire having a tread which is divided by circumferential grooves (1, 1'''), by transverse grooves (4, 4'') and, if appropriate, further channels (10, 10'') into profile positives (3, 3'', 6, 7, 8), at least some of which are provided with a plurality of standard sipes (11, 11a, 11', 11'a, 18, 18', 30) which have a width of greater than 0.4 mm and up to 0.8 mm and preferably extend parallel to one another within the profile positives (3, 6, 3'', 7, 8), and with micro sipes (12, 12a, 12', 12'', 19, 19', 31), which have a width of 0.1 mm to 0.4 mm, in particular up to 0.3 mm,
**characterized**
**in that** in at least one circumferential region of the tread, the standard sipes (11a, 11'a, 18), which are provided in the profile positives (3, 3' ', 6, 7, 8), extend parallel to the micro sipes (12, 12', 19), provided in these profile positives (3, 3' ' , 6, 7, 8), spaced apart from said micro sipes (12, 12', 19), and, in at least one other circumferential region of the tread, the standard sipes (11, 11', 18'), which are provided in the profile positives (3, 6, 8), extend in such a way that they intersect the micro sipes (12a, 12'', 19') which are provided in these profile positives (3, 6, 8).

2. Pneumatic vehicle tire according to Claim 1, **characterized in that** the tread has profile positives in which exclusively micro sipes extend as sipes, and other profile positives in which exclusively standard sipes extend as sipes.

3. Pneumatic vehicle tire according to Claim 1 or 2 having a tread with corresponding profile structures in the tread halves, **characterized in that** the profile positives (6, 8) have, in the central region, micro sipes (12'', 19') which extend in the circumferential direction, and the profile positives (3, 3'') have, in the side regions, micro sipes (12', 19) which extend in the lateral direction.

4. Pneumatic vehicle tire according to Claim 1 or 2 having a tread with corresponding profile structures in the tread halves, **characterized in that** the profile positives (6, 7, 8) have, in the central region, micro sipes (12) which extend in the lateral direction, and the profile positives (3) have, in the side regions, micro sipes (12a) which extend in the circumferential direction.

5. Pneumatic vehicle tire according to Claim 1 or 2, having a tread with different profile structures in the two tread halves, which tire is to be mounted in such a way that a specific tread half faces the longitudinal axis of the vehicle, **characterized in that**, in the tread half which faces the longitudinal axis of the vehicle, in particular on the shoulder side, profile positives with micro sipes which extend in the circumferential direction are arranged, and in the second tread half, in particular on the shoulder side, profile positives with micro sipes which extend in the lateral direction are arranged.

6. Pneumatic vehicle tire according to Claims 1 or 2, having a tread with different profile structures in the two tread halves, which tire is to be mounted in such a way that a specific tread half faces the longitudinal axis of the vehicle, **characterized in that** in the tread half which faces the longitudinal axis of the vehicle, in particular on the shoulder side, profile positives with micro sipes which extend in the lateral direction are arranged, and in the second tread half, in particular on the shoulder side, profile positives with micro sipes which extend in the circumferential direction are arranged.

7. Pneumatic vehicle tire according to Claim 1, **characterized in that** the micro sipes (31), which intersect the standard sipes, enclose an angle (α) of 5° to 175° with the standard sipes.

8. Pneumatic vehicle tire according to one of Claims 1 to 7, **characterized in that** the micro sipes (19) are arranged in rows of short micro sipes.

9. Pneumatic vehicle tire according to one of Claims 1 to 8, **characterized in that** the standard sipes (11a, 11'a, 15) extending in parallel and micro sipes (12, 12', 19) are arranged alternately within a profile positive (3, 6, 8).

10. Pneumatic vehicle tire according to one of Claims 1 to 9, **characterized in that** in profile positives in which exclusively micro sipes are provided, the density of said micro sipes is between 25 and 40 sipes per 10 cm profile positive, measured at a right angle to the extent of the micro sipes.

## Revendications

1. Bandage pneumatique pour roue de véhicule doté d'une bande de roulement divisée par des rainures périphériques (1, 1'''), des rainures transversales (4, 4'') et éventuellement d'autres rainures (10, 10'') en profilés positifs (3, 3'', 6, 7, 8) dont au moins une partie est dotée de plusieurs entailles normalisées (11, 11a, 11', 11'a, 18, 18', 30) d'une largeur supérieure à 0,4 mm et pouvant atteindre 0,8 mm et qui s'étendent de préférence parallèlement les unes aux autres à l'intérieur des profilés positifs (3, 3'', 6, 7, 8), ainsi que de microentailles (12, 12a, 12', 12'', 19, 19', 31) qui ont une largeur de 0,1 mm à 0,4 mm et en particulier de jusque 0,3 mm,
**caractérisé en ce que**
au moins dans une partie périphérique de la bande de roulement, les entailles normalisées (11a, 11'a, 18) prévues dans les profilés positifs (3, 3'', 6, 7, 8) s'étendent parallèlement à distance mutuelle des microentailles (12, 12', 19) prévues dans ces profilés positifs (3, 3' ' , 6, 7, 8) et
**en ce que** dans au moins une autre partie périphérique de la bande de roulement, les entailles normalisées (11, 11', 18) prévues dans les profilés positifs (3, 6, 8) s'étendent en croix par rapport aux microentailles (12a, 12'', 19') prévues dans ces profilés positifs (3, 6, 8).

2. Bandage pneumatique pour roue de véhicule selon la revendication 1, **caractérisé en ce que** la bande de roulement présente des profilés positifs dans lesquels seules des microentailles sont formées comme entailles et d'autres profilés positifs dans lesquels seules des entailles normalisées sont formées comme entailles.

3. Bandage pneumatique pour roue de véhicule selon les revendication 1 ou 2, qui présente une bande de roulement dotée de structures profilées qui se correspondent dans les moitiés de la bande de roulement, **caractérisé en ce que** les profilés positifs (6, 8) présentent dans la partie centrale des microentailles (12'', 19') qui s'étendent dans la direction périphérique et **en ce que** les profilés positifs (3, 3'') des parties latérales présentent des microentailles (12', 19) qui s'étendent dans la direction transversale.

4. Bandage pneumatique pour roue de véhicule selon les revendications 1 ou 2, **caractérisé en ce que** les profilés positifs (6, 7, 8) de la partie centrale présentent des microentailles (12) qui s'étendent dans la direction transversale et **en ce que** les profilés positifs (3) des parties latérales présentent des microentailles (12a) qui s'étendent dans la direction périphérique.

5. Bandage pneumatique pour roue de véhicule selon les revendication 1 ou 2, le bandage de roue devant être monté de telle sorte qu'une moitié définie de la bande de roulement soit tournée vers l'axe longitudinal du véhicule, **caractérisé en ce que** des profilés positifs à microentailles qui s'étendent dans la direction périphérique sont disposés dans la moitié de la bande de roulement tournée vers l'axe longitudinal du véhicule, en particulier du côté de l'épaulement, et **en ce que** des profilés positifs dotés de microentailles qui s'étendent dans la direction transversale sont disposés dans la deuxième moitié de la bande de roulement, en particulier du côté de l'épaulement.

6. Bandage pneumatique pour roue de véhicule selon les revendication 1 ou 2, le bandage de roue devant être monté de telle sorte qu'une moitié définie de la bande de roulement soit tournée vers l'axe longitudinal du véhicule, **caractérisé en ce que** des profilés positifs à microentailles qui s'étendent dans la direction transversale sont disposés dans la moitié de la bande de roulement tournée vers l'axe longitudinal du véhicule, en particulier du côté de l'épaulement, et **en ce que** des profilés positifs dotés de microentailles qui s'étendent dans la direction périphérique sont disposés dans la deuxième moitié de la bande de roulement, en particulier du côté de l'épaulement.

7. Bandage pneumatique pour roue de véhicule selon la revendication 1, **caractérisé en ce que** les microentailles (31) qui croisent les entailles normalisées forment avec les entailles normalisées (30) un angle (α) de 5° à 175°.

8. Bandage pneumatique pour roue de véhicule selon l'une des revendications 1 à 7, **caractérisé en ce que** les microentailles (19) sont disposées en rangées de courtes microentailles.

9. Bandage pneumatique pour roue de véhicule selon l'une des revendications 1 à 8, **caractérisé en ce qu'**à l'intérieur d'un profilé positif (3, 6, 8), les entailles normalisées (11a, 11'a, 15) et les microentailles (12, 12', 19) qui s'étendent parallèlement sont disposées en alternance.

10. Bandage pneumatique pour roue de véhicule selon l'une des revendications 1 à 9, **caractérisé en ce que** dans des profilés positifs dans lesquels seules des microentailles sont prévues, leur densité représente entre 25 et 40 entailles par 10 cm de profilé positif, à angle droit par rapport à l'extension des microentailles.
